# EUROPEAN PATENT SPECIFICATION

(11) **EP 1 742 414 B1**
(45) Date of publication and mention of the grant of the patent: **26.12.2012**
(21) Application number: 06013901.1
(22) Date of filing: 05.07.2006
(51) Int. Cl.: H04L 12/18

(54) **Peer-to-peer multicast gateway**
Peer-to-peer Mehrfachsendungsgateway
Passerelle de multidiffusion Peer-to-peer

(30) Priority: 05.07.2005 EP 05014550
(43) Date of publication of application: 10.01.2007
(73) Proprietor: Newtec Communications GmbH, 13507 Berlin (DE)
(72) Inventor: Zanoth, Christian, 54329 Konz (DE)
(74) Representative: Richter, Thomas Kurt Reinhold

(56) References cited:
- EP-A- 1 434 385
- WO-A-2005/117345
- US-A1- 2002 101 872
- CLARK R J ET AL: "Providing scalable Web services using multicast communication" COMPUTER NETWORKS AND ISDN SYSTEMS, NORTH HOLLAND PUBLISHING. AMSTERDAM, NL, vol. 29, no. 7, August 1997 (1997-08), pages 841-858, XP004096541 ISSN: 0169-7552

## Description

The invention is a method to distribute data to multiple clients by using a combination of unicast and multicast networks which are managed through a central multicast gateway.

Data distribution to a multiple number of receiving sites is today either done by using unicast networks (e.g. the Internet) or by using multicast networks (e.g. satellites).

EP 1 434 385 A1 discloses a method for overload protection in a data network for information delivery. Said method according to EP 1 434 385 A1 comprises the following steps:
- communicating by a server a plurality of unicast content messages having an identical content via the data network to a plurality of terminals respectively, each one of the plurality of unicast content messages corresponding to one of the plurality of terminals,
- routing the plurality of unicast content messages with the identical content to a message interceptor,
- receiving the plurality of unicast content messages with the identical content by the message interceptor,
- grouping the plurality of unicast content messages with the identical content into a distributable content message by the message interceptor, and
- distributing the distributable content message to the plurality of terminals via the data network by the message interceptor.
According to EP 1 434 385 A1 the data network is arranged to broadcast or multicast the distributable content message, respectively.

Within unicast networks there are two main concepts used for data distribution: client-server and peer-to-peer.

A client server network consists of one central server (e.g. ftp server) and one or multiple clients (e.g. ftp client), which up- or download data from such server. Data exchange (ftp data transfer) between the server and each single client is isolated from the other clients, i.e. data is only exchanged between the server and one client. Disadvantage of the client-server approach is the limited scalability. The main limiting factor is the physical connection of the server to the unicast network and the fact that each data distribution process is done in an isolated mode, which results in situations where the same data may be independently forwarded by the server to multiple clients e.g. multiple ftp clients request from one ftp server a new anti-virus update and the server then serves those multiple requests until the connection to the unicast network is saturated and no further request can be handled.

Peer-to-peer networks try to scope with the scalability problem by applying a different design principle: each node of a peer to peer network (e.g. bit-torrent) behaves as both - as server as well as client - and therefore those fully meshed peer-to-peer networks take advantage of the aggregated unicast network connectivity capacity of each peer. An additional advantage of modern peer-to-peer networks is the fact that there is no single central serving component which may cause a loss of service in case of outage. The disadvantage of redundant data distribution efforts is still not solved by peer-to-peer networks, as the same data may be still forwarded by one or multiple serving nodes to multiple clients in parallel.

Data distribution via multicast networks is used to tackle the disadvantage of redundant data distribution which occurs in unicast networks. The principle of data distribution via multicast networks is the following: there is one central server and several clients (all connected to the multicast network) which listen to the same data distribution (e.g. a financial ticker services via satellite) carried out by the server. Each single data packet transmitted by the server will be received in parallel by all listening clients. This eliminates the need for redundant data transmission and decreases the scalability problem which occurs within unicast networks. The scalability problem is of course only decreased in case the same content is required at the same time by multiple clients. In case the server transmits for each client different data then there is no scalability advantage compared to unicast networks. The disadvantage of data distribution via multicast networks is that multicast network resources are normally much more expensive (e.g. 100 times) than unicast network resources and therefore only used in case a couple of clients (e.g. > 100) can be served during one transmission.

The invention provides a mechanism to distribute data to multiple clients by avoiding the above described drawbacks and scalability limitations which the known methods imply. In order to achieve this goal unicast and multicast networks are combined through a central multicast gateway.

The method according to the present invention is defined by the appended claim.

A preferred embodiment of the present invention will now be described with respect to the accompanying drawings.

The described embodiment refers to a network with two links whereby the first link is a low-delay, highly reliable narrowband, bidirectional unicast link (3) and the second link is a high-delay, lossy, unidirectional multicast broadband link (6). Both links are connected to the multicast gateway(5).

### Figure 1:

A first node (1) request data via a unicast network (3) from a second node (4). The second node (4) transmits the requested data to the first node (1) either via a unicast network (3) or - in case the requesting node (1) is connected to a multicast network (6) - via a multicast network gateway (5) and the multicast network (6). Instead of being requested by a first node (1) the second node (4) may also decide to push such data to any listening node (e.g. (1) and (2)) without any request.

The emitting data source (4) may only decide to use - instead of or in addition to the unicast network (3) - the multicast network (6) in case of a certain number of requesting nodes (e.g. (1) and (2)) request data or a certain number of listening nodes (e.g. (1) and (2)) listening for data from a data source (4).

The data source may also take the decision to use either the unicast (3) or the multicast (6) network in case of other constraints like e.g. the date and time, the cost which occur for the use of the link, the object's data volume, the time to transmit the object or the elapsed time, a priority assigned to an object, the content type of the object (peer-to-peer application, file transfer via ftp, bitmap via http, voice-over-IP, etc.) or type of application (interactive vs. non-interactive).

In case the multicast network (6) is chosen for data transmission, then the data source (4) transmits the data via the unicast network (3) to a multicast gateway (5), which then forwards the data via the multicast network (6) to the receiving nodes (e.g. (1) and (2)).

The data source (4) may also decide to always distribute its data indirectly via the multicast gateway (5) and leave the decision to either use the unicast (3) or the multicast network (6) to the multicast gateway (5).

### Figure 2:

Instead of being connected via a unicast network (3) to the multicast gateway (5), the node which emits the data (4) may be located at the same physical location as the multicast gateway (5). Furthermore both devices ((4) and (5)) may even be integrated in the same physical unit.

### Figure 3:

The unicast network (3) and the multicast network (6) may be from a physical point of view partially or completely identical - which means that those two networks ((3) and (6)) may be two virtual networks which reside on the same physical network infrastructure.

### No Figure:

The multicast gateway (5) may also be the gateway of a so called "one or two way satellite Internet service", which receives requests via the unicast network (3) from a first node (1) for data residing at a second node (4) and which then requests such data from the second node (4) and returns such data via the unicast network (3) to the requesting node (1). In case the same data is also requested by another node (2) from the data providing node (4), then the multicast gateway (5) may decide to return the requested data not via the unicast network (3), but via the multicast network (5).

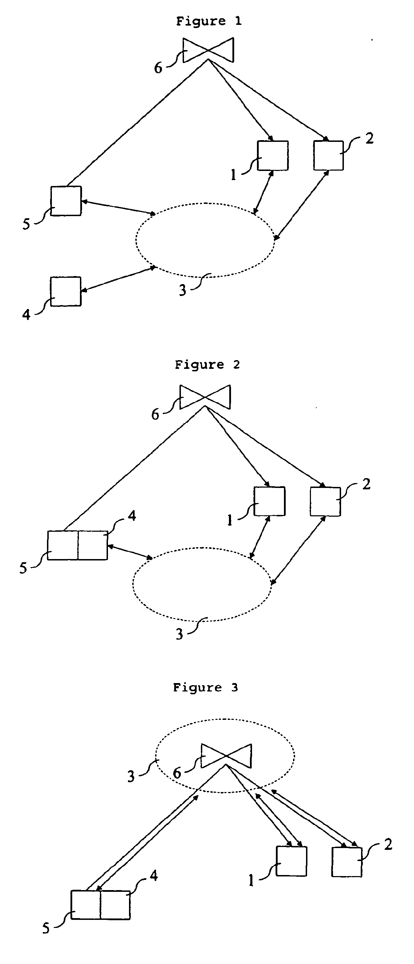

## Claims

1. Method to transmit requested objects between a second node (4) and a first node (1) by using:
- a multicast gateway (5), and
- at least one multicast network (6) between the multicast gateway (5) and the first node (1), and
- at least one unicast network (3) between a second node (4), the first node (1) and the multicast gateway (5),
comprising the following steps:
a) requesting from the first node (1) to the second node (4) to transmit an object from the second node (4) to the first node (1);
b) transmitting the object from the second node (4) to the first node (1) by transmitting the object either directly via the unicast network (3) to the first node (1) in unicast mode or via the unicast network in unicast mode to the multicast gateway, which then forwards the object via the multicast network in multicast mode to the first node (1), wherein the decision for using either the unicast network (3) or the multicast gateway (5) is taken by the second node (4);
c) continuous monitoring, which is either performed by the multicast gateway (5) or by the second node (4) until the object is completely transmitted, in order to determine whether another node (2) also requests the same object;
d) in case another first node (2) requests the same object, continuing the transmission of the object from the second node (4) to the first node (1) by transmitting the object via the unicast network in unicast mode to the multicast gateway, which then forwards the object via the multicast network in multicast mode to said first node (1) and to said another first node (2).

## Patentansprüche

1. Verfahren zum Übertragen angeforderter Objekte zwischen einem zweiten Knoten (4) und einem ersten Knoten (1) unter Benutzung
- eines Multicast-Gateways (5) und
- mindestens eines Multicast-Netzwerks (6) zwischen dem Multicast-Gateway (5) und dem ersten Knoten (1) und
- mindestens eines Unicast-Netzwerks (3) zwischen dem zweiten Knoten (4), dem ersten Knoten (1) und dem Multicast-Gateway (5)
mit den folgenden Schritten:
a) Richten einer Anforderung von dem ersten Knoten (1) an den zweiten Knoten (4), ein Objekt von dem zweiten Knoten (4) an den ersten Knoten (1) zu übertragen,
b) Übertragen des Objekts von dem zweiten Knoten (4) an den ersten Knoten (1), indem das Objekt entweder im Unicast-Modus direkt über das Unicast-Netzwerk (3) an den ersten Knoten (1) gesendet wird oder im Unicast-Modus über das Unicast-Netzwerk zu dem Multicast-Gateway, welches dann das Objekt im Multicast-Modus über das Multicast-Netzwerk an den ersten Knoten (1) weiterleitet, wobei die Entscheidung zur Benutzung entweder des Unicast-Netzwerks (3) oder des Multicast-Gateways (5) durch den zweiten Knoten (4) getroffen wird,
c) kontinuierliches Beobachten, welches entweder von dem Multicast-Gateway (5) oder von dem zweiten Knoten (4) ausgeführt wird bis das Objekt vollständig übertragen ist, um zu bestimmen, ob ein anderer Knoten (2) auch dasselbe Objekt anfordert,
d) falls ein anderer erster Knoten (2) dasselbe Objekt anfordert, Fortsetzen der Übertragung des Objekts von dem zweiten Knoten (4) zu dem ersten Knoten (1) durch Übertragen des Objekts im Unicast-Modus über das Unicast-Netzwerk zu dem Multicast-Gateway, welches dann das Objekt im Multicast-Modus über das Multicast-Netzwerk an den genannten ersten Knoten (1) und an den genannten anderen ersten Knoten (2) weiterleitet.

## Revendications

1. Procédé destiné à transmettre des objets demandés entre un second noeud (4) et un premier noeud (1), en utilisant :
une passerelle de multidiffusion (5) ;
au moins un réseau de multidiffusion (6) entre la passerelle de multidiffusion (5) et le premier noeud (1) ; et
au moins un réseau de monodiffusion (3) entre le second noeud (4), le premier noeud (1) et la passerelle de multidiffusion (5) ;
comprenant les étapes ci-dessous consistant à :
a) demander, à partir du premier noeud (1), au second noeud (4) de transmettre un objet du second noeud (4) au premier noeud (1) ;
b) transmettre l'objet du second noeud (4) au premier noeud (1) en transmettant l'objet, soit directement par l'intermédiaire du réseau de monodiffusion (3) au premier noeud (1) en mode de monodiffusion, soit par l'intermédiaire du réseau de monodiffusion en mode de monodiffusion à la passerelle de multidiffusion, laquelle achemine ensuite l'objet, par l'intermédiaire du réseau de multidiffusion en mode de multidiffusion, vers le premier noeud (1), dans lequel la décision d'utiliser le réseau de monodiffusion (3) ou la passerelle de multidiffusion (5) est prise par le second noeud (4) ;
c) exécuter une surveillance continue, laquelle est mise en oeuvre par la passerelle de multidiffusion (5) ou par le second noeud (4) jusqu'à ce que l'objet soit complètement transmis, afin de déterminer si un autre noeud (2) demande également le même objet ;
d) dans le cas où un autre premier noeud (2) demande le même objet, poursuivre la transmission de l'objet du second noeud (4) au premier noeud (1) en transmettant l'objet, par l'intermédiaire du réseau de monodiffusion en mode de monodiffusion, à la passerelle de multidiffusion, laquelle achemine ensuite l'objet, par l'intermédiaire du réseau de multidiffusion en mode de multidiffusion, audit premier noeud (1) et audit un autre premier noeud (2).
